# EUROPEAN PATENT APPLICATION

(11) **EP 2 292 937 A1**
(43) Date of publication of application: **09.03.2011**
(21) Application number: 09169543.7
(22) Date of filing: 04.09.2009
(51) Int. Cl.: F16B 13/14

(54) **Applying a fixing to a wall**

(71) Applicant: Vigrass, Mr.Jarrod, 30620 Mircia (ES)
(72) Inventor: Vigrass, Mr.Jarrod, 30620 Mircia (ES)
(74) Representative: Derry, Paul Stefan

(57) **Abstract**

A method of applying a fixing to a wall having a substrate faced with a facing layer comprises: providing a plug (20), the plug having: a cylindrical outer surface (24); an adhesive containing pellet (34) located at a first end of the plug; one or more holes formed at the first end of the plug; an open second end; and an internal screw thread (26) disposed on a cylindrical inner surface of the plug; providing a screw component (50), the screw component having a first screw thread configured to engage with the internal screw thread of the plug; forming a cylindrical hole in the facing layer of the wall, the hole having a depth equal to a thickness of the facing layer such that the hole extends to, but not beyond, a boundary between the facing layer and the substrate; inserting the plug into the cylindrical hole such that the first end abuts the substrate; screwing the screw component into the plug such as to break the adhesive containing pellet at the first end of the plug and to force the adhesive through the one or more holes at the first end of the plug, thereby to allow the adhesive to bond the plug to the facing layer and to the substrate.

## Description

The present invention relates to applying a fixing to a wall. In particular, although not exclusively, the invention relates to a wall fixing able to be held in a plaster facing on a substrate of for example masonry or brickwork and which does not require a hole to be made in the substrate.

Numerous attempts have been made at providing wall fixings such as to allow objects, furniture etc. to be affixed to a wall. Many require specialist tools and/or complex processes and thus are not generally suited to novices. Others are simpler to install, but many are not particularly effective and many may not be removable and/or may damage a wall surface when removed. The invention was made in this context.

According to a first aspect of the present invention there is provided a method of applying a fixing to a wall having a substrate faced with a facing layer, the method comprising:
providing a plug, the plug having:
   a cylindrical outer surface;
   an adhesive containing pellet located at a first end of the plug;
   one or more holes formed at the first end of the plug;
   an open second end; and
   an internal screw thread disposed on a cylindrical inner surface of the plug;
providing a screw component, the screw component having a first screw thread configured to engage with the internal screw thread of the plug;
forming a cylindrical hole in the facing layer of the wall, the hole having a depth equal to a thickness of the facing layer such that the hole extends to, but not beyond, a boundary between the facing layer and the substrate;
inserting the plug into the cylindrical hole such that the first end abuts the substrate;
screwing the screw component into the plug such as to break the adhesive containing pellet at the first end of the plug and to force the adhesive through the one or more holes at the first end of the plug, thereby to allow the adhesive to bond the plug to the facing layer and to the substrate.

An advantage of this is that power tools can be avoided in the process of creating the wall fixing. This is because the wall plug is retained only in the plaster facing of a wall and not within the substrate, e.g. masonry. The hole which retains the wall plug can be made with a sharp manual tool which requires no specialist knowledge to operate.

This can provide a strong fixing which does not require a hole to be made in the masonry of a wall.

Additionally this can provide a strong fixing which does not require the application of any adhesive by the user. The adhesive containing pellet which is broken by action of inserting a screw component, thus releasing the adhesive. Having been released the adhesive can be forced out of the plug through holes in the plug thereby securing the plug to the facing layer.

The plug can be further secured in the facing of the wall by abutting against the substrate. When adhesive is forced out of the wall plug, some can be forced into any gaps between the rear surface of the wall plug and the masonry, thereby bonding the plug to the masonry.

The adhesive containing pellet may be abutted by a flexible seal, the flexible seal being configured to communicate pressure from the screw component to the adhesive containing and to resist the flow of adhesive from the adhesive containing pellet into the part of the plug between the flexible seal and the open second end.

A further advantage is that the wall fixing can be partly removable. In the embodiments all protruding parts of the wall fixing can be removed. This is because the screw component of the wall fixing may not come into contact with the adhesive and thus is removable, leaving only the plug retained in the wall. Furthermore, the wall fixing may be re-installable at a later time. Since the internal thread of the wall plug may not be deformed or covered in adhesive, the same or another screw component may be reinserted.

The screw component may comprise a second screw thread disposed at an opposite end of the screw component from the first screw thread, wherein the opposite end of the screw component protrudes from the wall when the screw component is located in the plug.

The method may further comprise providing a wall fitting having a internally threaded portion; and attaching the wall fitting to the screw component by engaging the internally threaded portion of the wall fitting with the second screw thread of the screw component.

Many different hooks and fittings may be attached to the screw component of the wall fixing. The protruding part of the wall fixing may be threaded and configured to engage with the thread of a selection of different hooks and fittings. These hooks and fittings may be removed and changed as desired. Fittings that are secured by a screw thread may be easily removed, changed and replaced.

Forming a cylindrical hole in the facing layer of the wall may comprise using a manual hole forming tool to form the cylindrical hole in the facing layer of the wall, wherein the manual hole forming tool has a tubular cutting piece, and the method of the present invention may further comprise pushing an end of the tubular cutting piece into the facing layer of the wall; and removing the tubular cutting piece and material of the facing layer that is encompassed by the tubular cutting piece.

The method may comprise removing the screw component from the plug subsequently to allowing the adhesive to bond the plug to the facing layer and to the substrate.

Advantageously the one or more holes are formed in the cylindrical outer surface of the plug.

According to a second aspect of the invention there is provided apparatus for applying a fixing to a wall having a substrate faced with a facing layer, the apparatus comprising:
a plug, the plug having:
   a cylindrical outer surface;
   an adhesive containing pellet located at a first end of the plug;
   one or more holes formed at the first end of the plug;
   an open second end; and
   an internal screw thread disposed on a cylindrical inner surface of the plug;
a screw component, the screw component having a first screw thread configured to engage with the internal screw thread of the plug; and
a manual hole forming tool having a tubular cutting piece and being configured to form a cylindrical hole in the facing layer of the wall having an internal diameter approximately the same as the external diameter of the plug in the facing layer of the wall.

The one or more holes may be formed in the cylindrical outer surface of the plug.

The adhesive containing pellet may be abutted by a flexible seal, the flexible seal being configured to communicate pressure from the screw component to the adhesive containing pellet and to resist the flow of adhesive from the adhesive containing pellet into the part of the plug between the flexible seal and the open second end.

The screw component may comprise a second screw thread disposed at an opposite end of the screw component from the first screw thread, and wherein the opposite end of the screw component protrudes from the wall when the screw component is located in the plug.

The apparatus may comprise a wall fitting having a internally threaded portion that is able to be engaged with the second screw thread of the screw component.

The screw component may be removable from the plug.

Embodiments of the present invention will now be described, by way of example only, with reference to the accompanying drawings in which:
Figure 1 illustrates a hole forming tool suitable for use with the present invention;
Figure 2 is a plan view of a wall plug according to one embodiment of the present invention;
Figure 3 illustrates the wall plug of figure 2 inserted into a hole made in a plaster layer of a wall with the hole forming tool of figure 1;
Figure 4 illustrates in detail a glue pellet and flexible seal of the wall plug of figure 2;
Figure 5 illustrates a double ended screw suitable for use with the Figure 2 wall plug;
Figure 6 illustrates a single ended screw suitable for use with the Figure 2 wall plug;
Figure 7 shows the wall plug of figure 2 inserted into a plastered wall in combination with a double ended screw;
Figure 8 shows a double ended screw fully inserted into the wall plug and with an attached hook fitting.

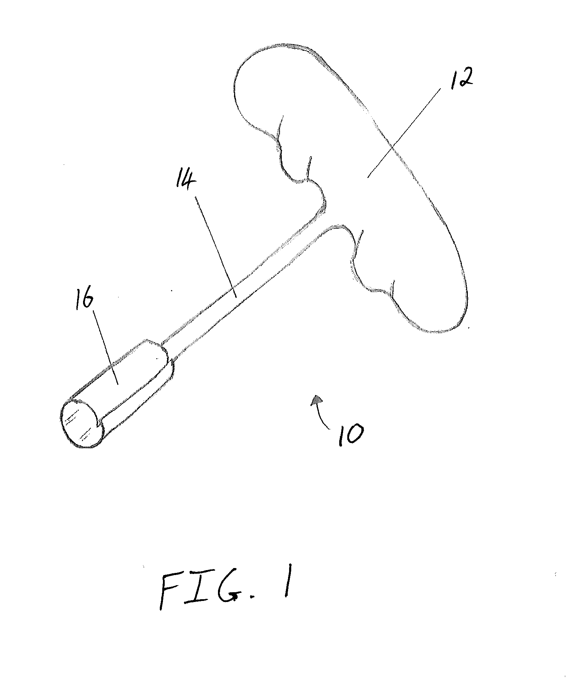

Referring firstly to figure 1, a hole forming tool 10 is illustrated. The tool 10 comprises a handle 12, a shaft 14 and a cutting piece 16. The handle is connected at one end of the shaft 14. The handle 12 comprises an elongate component that is arranged perpendicularly to a longitudinal axis of the shaft 14. The shaft 14 joins with the handle 12 half way along the length of the handle 12. The handle 12 includes ridges on a surface on the side of the handle that joins the shaft 14. The ridges are separated by a distance approximately equal to the distance between digits on a user's hand. The handle 12 is shaped so that it may be firmly gripped by a user's hand such that rotational and longitudinal force may be effectively transmitted via the shaft 14 to the cutting piece 16.

The handle 12 and shaft 14 may be formed of a single piece of material, or may be separate pieces of material joined together. The handle 12 and shaft 14 may be made of metal, wood, plastic or any suitably strong material.

The cutting piece 16 is fixed to the end of the shaft 14 that is opposite to the handle 12. The cutting piece 16 is made of a bent sheet of material, for instance metal. Opposite edges of the sheet are bent around such as to meet such as to form a hollow tube. The cutting piece 16 therefore has a circular cross section. The tube is coaxial with the shaft 14. A corner at one of the opposite edges of the sheet meets the corresponding corner at the other opposite edge. As such, an edge of the sheet that connects these two corners forms a circular cutting edge. The cutting edge is furthest from the handle 12.

The edge of the metal sheet forming the cutting surface of the cutting piece 16 may is sharpened. This can make it easier to make a hole. Because the cutting piece 16 is hollow, the hole making process is simplified. The hollow cutting piece 16 also allows the removal of material.

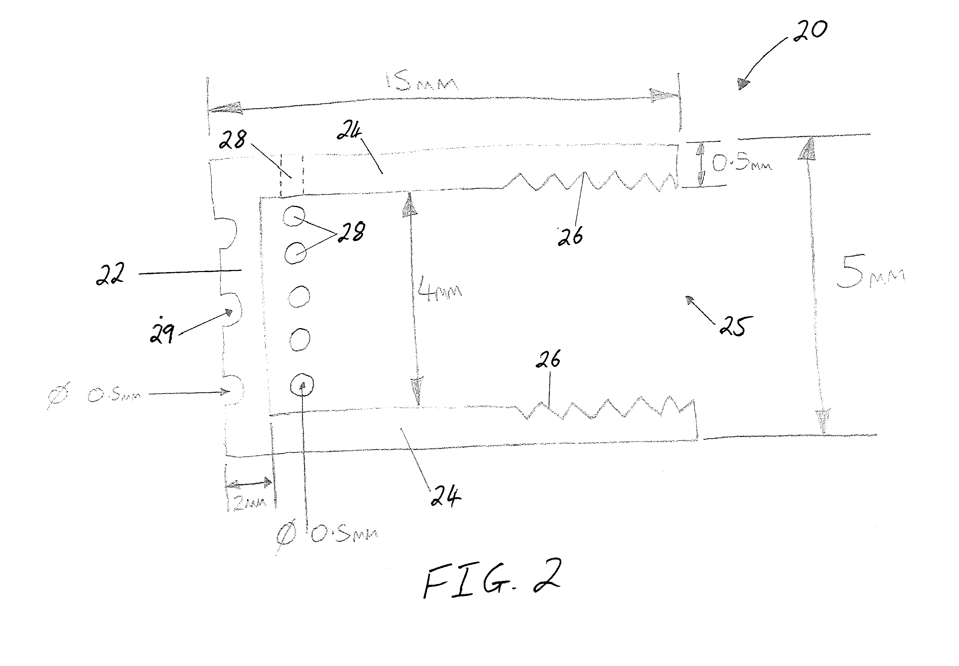

Figure 2 shows a wall plug 20 comprising a circular rear wall 22 and a cylindrical side wall 24. The circular rear wall 22 is arranged perpendicularly to the longitudinal axis of the cylindrical side wall 24. The rear wall 22 adjoins the side wall 24 at a rear-most end of the side wall 24. The wall plug 20 has a front end 25 located at the opposite end of the side wall 24 from the rear wall 22. The front end 25 of the wall plug 20 is open. The wall plug 20 may be made of metal, plastic or any other suitable material but is preferably made of metal. The rear wall 22 and side wall 24 of the wall plug 20 may be formed of a single piece of material or may be formed of two or more pieces of material joined together.

The internal surface of the side wall 24 has a thread 26. The thread 26 may extend from the front end 25 of the wall plug 20 or may begin at some distance inset from the front end 25 of the wall plug. The thread 26 is shown in figure 2 extending for a part of the length of the side wall 24. Alternatively, the thread 26 may extend for the whole length of the side wall 24. Various dimensions of the wall plug 20 are shown in figure 2, although figure 2 is not drawn to scale. Preferably the external diameter of the wall plug 20, in this instance 5mm, is approximately equal to the internal diameter of the cutting piece 16 of the hole forming tool 10 shown in figure 1.

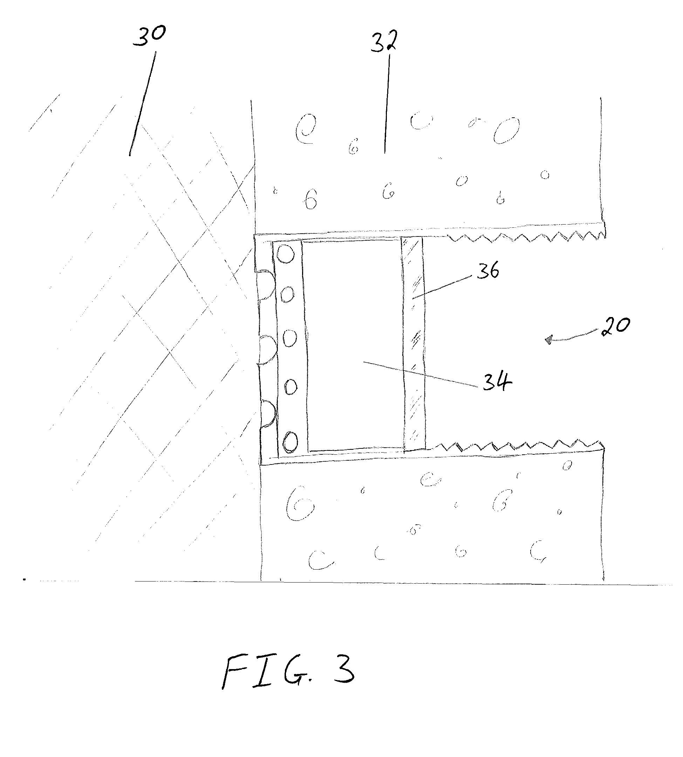

Holes 28 are shown located in the side wall 24, close to the rear wall 22 of the wall plug 20. The holes 28 are circular in cross section. The holes 28 are formed in a ring around the circumference of the wall plug 20. Each hole extends through the thickness of the side wall 24 so as to provide a passageway. The dashed lines represent a substantially vertically orientated hole. The holes 28 may be evenly spaced around the circumference of the wall plug 20 or may be concentrated in one or more locations. The holes 28 may alternatively be located further from the rear wall 22 of the wall plug 20, for example at the mid point of the wall plug 20. There may be one or more further rings of holes 28 formed around the circumference of the wall plug 20. Holes 28 may additionally be located in the rear wall 22 of the wall plug 20. Semi-circular/semi-spherical shaped indentations 29 are present in the external surface of the rear wall 22. The indentations 29 provide a place which any debris remaining in the hole can be located to without negatively impacting the proximity of the masonry 30 to the end face of the wall plug 20.
With reference to figure 3, the wall plug 20 is shown *in situ* within a hole made by the hole forming tool 10 of figure 1. A wall comprises masonry 30 and a plaster facing 32. The masonry 30 may be brick, block work, stone or the like. Alternatively the wall could comprise concrete or plasterboard, or any other suitable wall-forming substrate. The wall plug 20 may be provided in a range of lengths to match the thickness of plaster facing 32 present. Although the wall plug 20 is shown in figure 3 as flush with the surface of the plaster facing 32, a small amount of inset or protrusion may alternatively be present.

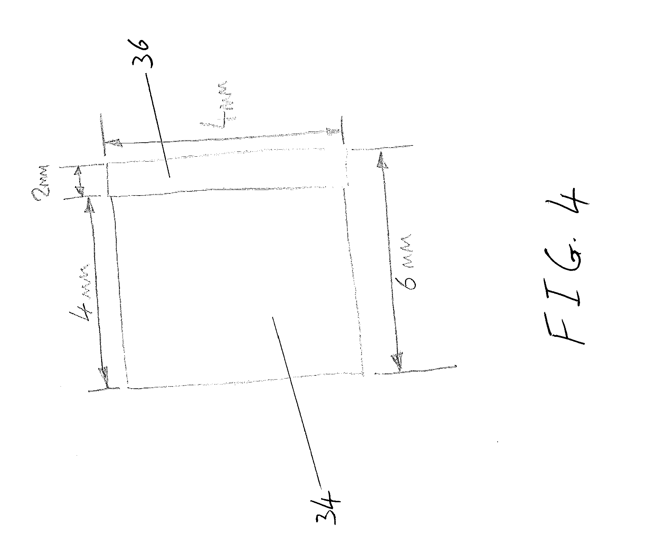

The wall plug 20 contains a glue pellet 34, which is shown in more detail in Figure 4. The glue pellet 34 is adjacent to the rear wall 22 of the wall plug 20. The glue pellet 34 includes a casing (not visible in the figure) made of an easily breakable material such as a thin plastic. The casing of the glue pellet 34 contains a strong adhesive in liquid form. The holes 28 in the side wall 24 of the wall plug 20 provide a passage for the adhesive in the glue pellet 34 to exit the wall plug 20 when the glue pellet 34 is broken. A flexible seal 36 abuts the glue pellet 34 on the side of the glue pellet 34 nearest the front end 25 of the wall plug. The glue pellet 34 need not necessarily fill the space defined by the rear wall 22, flexible seal 36 and side wall 24. The glue pellet may be cylindrical, spherical or another suitable shape. The flexible seal 36 resists the flow of adhesive from the glue pellet 34 into the part of the wall plug 20 between the flexible seal 36 and the front end 25. The glue pellet 34 and flexible seal 36 are prefabricated within the wall plug 20. During prefabrication, the edges of the flexible seal 36 may be secured to the inner surface of the side wall 24 in order to better resist the flow of adhesive from the glue pellet 34 into the part of the wall plug 20 between the flexible seal 36 and the front end 25.

Figure 4 is a more detailed representation of the glue pellet 34 and flexible seal 36. The dimensions shown in figure 4 are for illustrative purposes only, however the flexible seal 36 has the same diameter as the internal surface of the side wall 24.

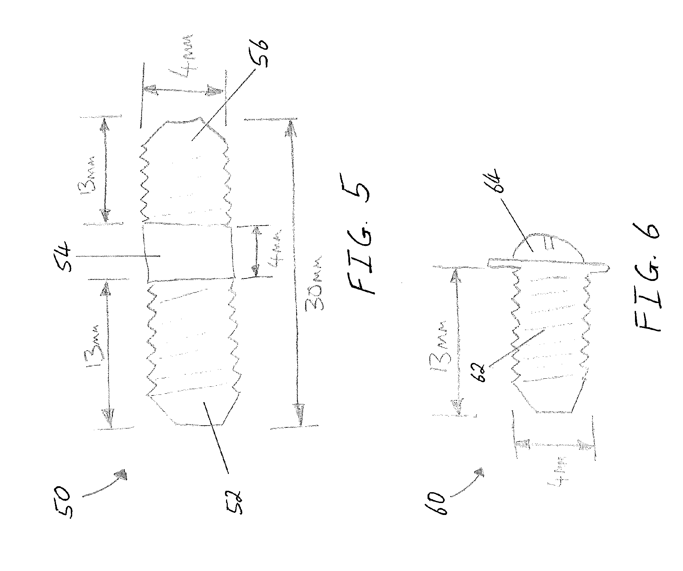

Figures 5 and 6 illustrate screw components suitable for use with the wall plug 20.

Figure 5 is a double ended screw 50 having an insertion end 52, a middle portion 54 and an external end 56. These three components are circular in cross section and coaxial. The double ended screw 50 is preferably made of a single piece of metal. Both the insertion end 52 and external end 56 comprise threaded screws. The distal end of the insertion end 52 is preferably flat or blunt. The insertion end 52 is retained within the wall plug 20 by engagement with the thread 26 of the wall plug 20. Although not shown, the middle portion 54 may have a slightly larger diameter than the insertion end 52. The larger diameter causes the middle portion 54 to abut against the front end 25 of the side wall 24 when the double ended screw 50 is fully inserted and prevents the double ended screw 50 from being inserted any further. When the double ended screw 50 is fully inserted into the wall plug 20, the external end 56 protrudes from the wall plug 20. Wall fittings such as hooks may be attached to the external end 56. The diameter of the insertion end 52 is chosen such as to allow it to engage with the thread 26 of the side wall 24.

Figure 6 shows a single ended screw 60 having a screw portion 62 and an external portion 64. The single ended screw 60 is preferably made of a single piece of metal. The screw portion 62 is retained within the wall plug 20 by engagement with the thread 26. The fitting portion 64 may for example be for curtain rails or may be for another type of fitting where it is desirable to have only a small protrusion from the wall surface.

A method of creating a wall fixing will now be described in relation to figures 1 to 8. Firstly a cylindrical hole is made in a plaster facing 32 of a wall using the hole forming tool 10. The hole is made by placing the cutting edge of the cutting piece 16 of the hole forming tool 10 against a wall with the longitudinal axis of the hole forming tool 10 substantially perpendicular to the surface of the wall. Longitudinal force is then applied via the handle 12 and along the shaft 14 to the cutting piece 16. The handle 12 is also rotated, causing the cutting piece 16 to rotate, so that the cutting edge of the cutting piece 16 moves across the surface of the wall. As the cutting piece 16 penetrates the plaster facing 32, the plaster encircled by the cutting edge is collected by the hollow tube formed by the cutting piece 16. The cutting piece 16 is pushed through the plaster facing 32 until it reaches masonry 30, which it does not cut through. This can be detected by the user since penetration normally will cease, and there may also be a different sensation experienced when rotating the tool whilst applying longitudinal force. The cutting piece 16 is then withdrawn along with the plaster which has been collected in the hollow tube formed by the cutting piece 16. Afterwards the hole is cleared of dust using compressed air, for instance from an aerosol container or by the user exhaling quickly into the hole, preferably through a drinking straw or other tube.

A wall plug 20 as shown in figure 2 is then pushed into the hole that has been made in the plaster facing 32. As previously described, the wall plug 20 has a circular rear wall 22 adjoined to a cylindrical side wall 24. The external surface of the rear wall 22 enters the hole in the plaster facing first and is pushed inwards until the rear wall 22 meets and abuts the masonry 30 behind the plaster facing 32 as shown in figure 3. The dimensions of the hole forming tool 10 and the wall plug 20 are selected such that the wall plug 20 can be pushed into the hole made by the cutting piece 16 without meeting significant resistance and that there are not large gaps between the outside of the wall plug 20 and the sides of the hole.

The wall plug 20 is made of metal material and thus does not deform as it is inserted into the hole. As such, the glue pellet 34 does not break during insertion of the wall plug 20.

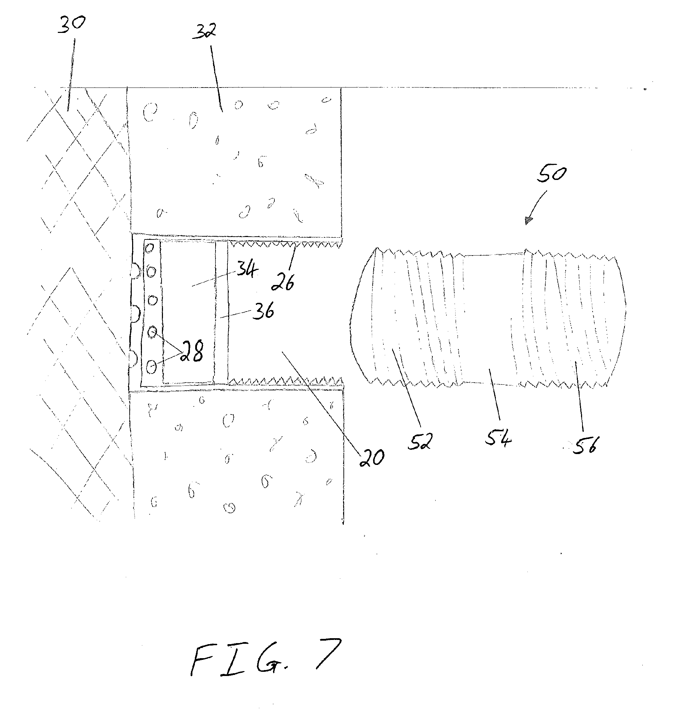

Figure 7 shows the double ended screw 50 of figure 5 ready for insertion into the wall plug 20 which is situated within a hole in plaster facing 32. The diameter, thread depth and thread pitch of the insertion end 52 are chosen so that the insertion end 52 engages with the thread 26 on the inner surface of the side wall 24 and can be securely retained within the wall plug 20. The insertion end 52 of the double ended screw 50 is placed against the front end 25 of the wall plug 20 so that it is substantially perpendicular to the surface of the wall. This reduces the chance of cross-threading and damage to the wall plug 20 when the double ended screw 50 is inserted. The double ended screw 50 is rotated so that the thread of the insertion end 52 engages with the thread 26 and the double ended screw 50 moves longitudinally into the wall plug 20.

As the double ended screw 50 enters the wall plug 20, the insertion end 52 comes into contact with the flexible seal 36. The flexible seal 36 is made of an elastic material and so deforms under pressure from the insertion end 52 of the double ended screw 50. The flexible seal 36 communicates pressure from the double ended screw 50 on the glue pellet 34. The casing of the glue pellet 34 is easily broken under pressure and therefore ruptures as the double ended screw 50 is moved along the wall plug 20, releasing the adhesive contained within the glue pellet 34. The double ended screw 50 continues to move longitudinally towards the rear wall 22 of the wall plug 20 as it is rotated. This action causes deformation of the flexible seal 36, which communicates pressure to the liquid adhesive now present in the rear-most part of the wall plug 20. The adhesive is forced out of the wall plug 20 through the holes 28. The adhesive fills gaps between the external surface of the side wall 24 and the layer of plaster facing 32 in which the wall plug 20 is situated. The adhesive is also forced around the back of the wall plug 20 and fills gaps between the external surface of the rear wall 22 and the masonry 30. The adhesive is prevented from reaching the double ended screw 50 by the flexible seal 36.

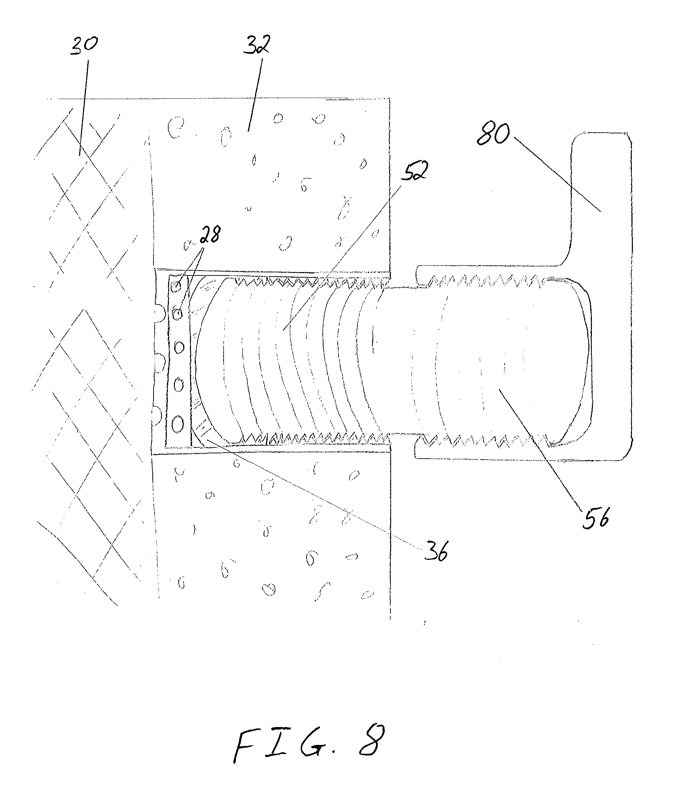

Figure 8 shows the double ended screw 50 fully inserted into the wall plug 20. The double ended screw 50 may be inserted until the flexible seal 36 meets the rear wall 22 and is unable to be moved or compressed further. Alternatively the longitudinal motion of the double ended screw 50 may be limited by action of the middle portion 54 of the double ended screw 50 abutting against the front end 25 of the side wall 24. Once the double ended screw 50 has been fully inserted into the wall plug 20 the arrangement is left undisturbed to allow the adhesive to set or cure.

Once the adhesive has set, a wall fitting 80 may be attached to the external end 56. The wall fitting 80 is internally threaded so as to engage with the thread on the external end 56. The wall fitting 80 may be hook shaped as shown or may be another suitable shape. The wall fitting 80 may be suitable for receiving pictures, mirrors, coats, towels, curtains, shelves, vases or any other item suitable for wall attachment.

Although the insertion end 52 and external end 56 of the double ended screw 50 are shown as having the same diameter, the external end 56 may have a larger or smaller diameter than the insertion end 52 in order to accommodate different sizes of wall fitting 80.

Since the flexible seal 36 resists the flow of adhesive into the part of the wall plug 20 between the flexible seal 36 and the front end 25, the double ended screw 50 may be removed from the wall at a later time. This means that should a user decide that a wall fixing is no longer required, the user will not be left with a hook, screw or nail sticking out of their wall. Hole covering caps arranged to be pushed into the front end 25 of the double ended screw 50 may be used to conceal the hole. The hole covering caps may be able to be screwed into and out of the wall plug 20, so as to allow re-use of the fixing at a later time.

The wall plug 20 described is a shallow wall plug which is held only in the facing plaster of a wall. The self releasing adhesive contained in the glue pellet is forced to fill any small gaps between the wall plug and the hole, thus forming a significantly stronger bond with the facing plaster layer and substrate masonry than would be possible if no adhesive were present or if the adhesive were applied manually before the wall plug were inserted.

The outer surface of the side walls 24 may also comprise barbs, flaps, corrugations or some other suitable structure. Such can prevent undesired movement of the wall plug 20 as a screw is inserted. For instance, such features can prevent rotational movement of the wall plug, which otherwise may hinder or prevent a screw (such as the screw 50) from being inserted. A structure on the outer surface of the side walls may also define a space between the wall plug and surrounding plaster facing into which adhesive would be forced. This may result in a stronger bond between the wall plug 20 and the wall.

## Claims

1. A method of applying a fixing to a wall having a substrate faced with a facing layer, the method comprising:
providing a plug, the plug having:
a cylindrical outer surface;
an adhesive containing pellet located at a first end of the plug;
one or more holes formed at the first end of the plug;
an open second end; and
an internal screw thread disposed on a cylindrical inner surface of the plug;
providing a screw component, the screw component having a first screw thread configured to engage with the internal screw thread of the plug;
forming a cylindrical hole in the facing layer of the wall, the hole having a depth equal to a thickness of the facing layer such that the hole extends to, but not beyond, a boundary between the facing layer and the substrate;
inserting the plug into the cylindrical hole such that the first end abuts the substrate;
screwing the screw component into the plug such as to break the adhesive containing pellet at the first end of the plug and to force the adhesive through the one or more holes at the first end of the plug, thereby to allow the adhesive to bond the plug to the facing layer and to the substrate.

2. A method according to claim 1, wherein the adhesive containing pellet is abutted by a flexible seal, the flexible seal being configured to communicate pressure from the screw component to the adhesive containing and to resist the flow of adhesive from the adhesive containing pellet into the part of the plug between the flexible seal and the open second end.

3. A method according to claim 1 or claim 2, wherein the screw component comprises a second screw thread disposed at an opposite end of the screw component from the first screw thread, and wherein the opposite end of the screw component protrudes from the wall when the screw component is located in the plug.

4. A method according to claim 3, the method further comprising;
providing a wall fitting having a internally threaded portion; and
attaching the wall fitting to the screw component by engaging the internally threaded portion of the wall fitting with the second screw thread of the screw component.

5. A method according to any preceding claim, the method further comprising;
using a manual hole forming tool to form the cylindrical hole in the facing layer of the wall.

6. A method according to claim 5, wherein the manual hole forming tool has a tubular cutting piece, the method comprising;
pushing an end of the tubular cutting piece into the facing layer of the wall; and
removing the tubular cutting piece and material of the facing layer that is encompassed by the tubular cutting piece.

7. A method according to any preceding claim, comprising removing the screw component from the plug subsequently to allowing the adhesive to bond the plug to the facing layer and to the substrate.

8. A method as claimed in any preceding claim, wherein the one or more holes are formed in the cylindrical outer surface of the plug.

9. Apparatus for applying a fixing to a wall having a substrate faced with a facing layer, the apparatus comprising:
a plug, the plug having:
a cylindrical outer surface;
an adhesive containing pellet located at a first end of the plug;
one or more holes formed at the first end of the plug;
an open second end; and
an internal screw thread disposed on a cylindrical inner surface of the plug;
a screw component, the screw component having a first screw thread configured to engage with the internal screw thread of the plug; and
a manual hole forming tool having a tubular cutting piece and being configured to form a cylindrical hole in the facing layer of the wall having an internal diameter approximately the same as the external diameter of the plug in the facing layer of the wall.

10. Apparatus according to claim 9, wherein the one or more holes are formed in the cylindrical outer surface of the plug.

11. Apparatus according to claim 9 or claim 10, wherein the adhesive containing pellet is abutted by a flexible seal, the flexible seal being configured to communicate pressure from the screw component to the adhesive containing pellet and to resist the flow of adhesive from the adhesive containing pellet into the part of the plug between the flexible seal and the open second end.

12. Apparatus according to claims 9 to 11, wherein the screw component comprises a second screw thread disposed at an opposite end of the screw component from the first screw thread, and wherein the opposite end of the screw component protrudes from the wall when the screw component is located in the plug.

13. Apparatus according to claims 9 to 12, comprising a wall fitting having a internally threaded portion that is able to be engaged with the second screw thread of the screw component.

14. Apparatus according to claims 9 to 13, wherein the screw component is removable from the plug.
